# EUROPÄISCHE PATENTSCHRIFT

(11) **EP 1 143 226 B1**
(45) Veröffentlichungstag und Bekanntmachung des Hinweises auf die Patenterteilung: **17.09.2008**
(21) Anmeldenummer: 01106071.2
(22) Anmeldetag: 12.03.2001
(51) Int. Cl.: G01F 1/00, G01F 23/00, G01F 23/296, B65D 90/48, B67D 5/14, B67D 5/30

(54) **Durchflussmessung mittels Ermittlung einer Füllstandsänderung**
Volume flow measurement using a level change measurement
Mesure de débit par mesure de variation du niveau

(30) Priorität: 11.03.2000 DE 20004378 U
(43) Veröffentlichungstag der Anmeldung: 10.10.2001
(73) Patentinhaber: Dezidata GmbH, 94469 Deggendorf (DE)
(72) Erfinder: Decker, Rainer, Dr., 94469 Deggendorf (DE)
(74) Vertreter: Lindner, Manfred Klaus

(56) Entgegenhaltungen:
- EP-A- 0 315 356
- WO-A-99/24794
- DE-U- 9 307 684
- US-A- 1 711 676
- US-A- 4 815 323
- PATENT ABSTRACTS OF JAPAN Bd. 0062, Nr. 53 (M-178), 11. Dezember 1982 (1982-12-11) & JP 57 147929 A (NISSAN JIDOSHA KK), 13. September 1982 (1982-09-13)
- PATENT ABSTRACTS OF JAPAN Bd. 0183, Nr. 94 (P-1775), 22. Juli 1994 (1994-07-22) & JP 06 111197 A (NIPPONDENSO CO LTD), 22. April 1994 (1994-04-22)

## Beschreibung

Die Erfindung betrifft ein System zur Ermittlung einer Füllstandsänderung in einer Tankkammer eines Tankfahrzeuges nach dem Oberbegriff des Anspruchs 1 sowie ein entsprechendes Verfahren nach dem Oberbegriff des Anspruchs 7.

Tankfahrzeuge werden in vielen Bereichen der Wirtschaft zum Transport von flüssigen Gütern eingesetzt. Häufig besteht dabei die Notwendigkeit, bei der Abgabe z.B. zum Zwecke der Anlieferung die Menge der geladenen Produkte zu bestimmen. Seit einiger Zeit sind in der Praxis zur Füllstandsbestimmung und damit zur Ermittlung einer Füllstandsänderung elektronisch arbeitende Peilsysteme bekannt, die sich auch im mobilen Einsatz bewährt haben.

Gesetzliche Regelungen, wie beispielsweise Eichgesetze, legen fest, in welcher Weise und mit welcher Genauigkeit solche Messungen zu erfolgen haben, wenn deren Ergebnis Grundlage eines Geschäftsvorgangs ist.

Es gibt in der Praxis für die Inhaltsbestimmung von Tankfahrzeugen ein PTB-zugelassenes elektronisches Peilsystem, mit dem der Inhalt der Kammern eines Tankfahrzeuges sehr genau bestimmt und so beispielsweise durch eine Differenzpeilung oder - ermittlung eine abgegebene Menge ermittelt werden kann. Gegenüber dem herkömmlichen Verfahren, einen in das Leitungssystem des Fahrzeuges eingebauten Durchflußmesser als Volumenzähler für eine Abgabemenge zu verwenden, bietet diese Methode erhebliche Vorteile, wie absolute Vermischungsfreiheit, signifikant geringeres Gewicht der Anlage, Verschleißfreiheit, deutlich schnellere Abgabe der Produkte durch den Wegfall von als Strömungsbremsen wirkenden Durchflußmessern sowie eine weitere erhebliche Beschleunigung durch die Möglichkeit, aus mehreren Kammern parallel Produkte abzugeben.

Diese Methode der Inhaltsbestimmung während der Produktabgabe zur Ermittlung der Abgabemenge mittels elektronischer Peileinrichtungen hat aber auch den Nachteil, daß bedingt durch gesetzliche Vorgaben aus einer Kammer des Tankfahrzeuges ein Mindestvolumen von derzeit einem Viertel des Gesamt-Kammervolumens abgegeben werden muß, um die erforderliche Genauigkeit zu erreichen, die sich nach den gesetzlichen Vorgaben auf das abgegebene Volumen bezieht. Um die gesetzlich vorgegebene Eichfehlergrenze von 0,5% zu erreichen, muß also der Kammerinhalt grob gesprochen mit vierfach besserer Genauigkeit gemessen werden, also ca. 0,1%.

Da typische Tankfahrzeuge Kammergrößen zwischen 4000 und 20000 Litern besitzen, stellt diese Beschränkung einen Nachteil gegenüber den traditionellen Durchflußzählern dar, die bis herab zu Mengen von 200 Litern mit der geforderten Genauigkeit messen können.

Weiterhin werden die Möglichkeiten elektronischer Peilsysteme derzeit nur ungenügend genutzt, und es besteht ein Bedarf, weitere Informationen aus solchen Abgabemengenbestimmungssystemen und Verfahren nutzen zu können.

Das dokument WO-A-99/24794 beschreibt ein elektronisches Peilsystem, mit dem der Inhalt der Kammern eines Tankfahrzeuges bestimmt werden kann.

Die vorliegende Erfindung hat daher zum Ziel, Systeme und Verfahren zur Produktabgabemengenbestimmung bei Tankfahrzeugen mit einem höheren Einsatznutzen für die Anwender zu schaffen.

Dies wird erfindungsgemäß mit einem System zur Ermittlung einer Füllstandsänderung in einer Tankkammer eines Tankfahrzeuges nach dem Anspruch 1 sowie einem Verfahren zur Ermittlung einer Füllstandsänderung in einer Tankkammer eines Tankfahrzeuges nach dem Anspruch 7 erreicht. Vorteilhafte Ausführungsformen der Erfindung sind in den Unteransprüchen angegeben.

Ein erfindungsgemäßes System zur Ermittlung einer Füllstandsänderung in einer Tankkammer eines Tankfahrzeuges enthält neben einem elektronischen Peilsystem zur Füllstandserfassung der Tankkammer eines Tankfahrzeuges in Kombination damit wenigstens eine weitere Datenerfassungs- oder -auswerteeinrichtung für wenigstens eine weitere Größe bezüglich des Tankinhaltes, eines Abgabevorganges und/oder des Fahrzeuges.

Verfahrensmäßig ist durch die Erfindung vorgesehen, daß bei einem Verfahren zur Ermittlung einer Füllstandsänderung in einer Tankkammer eines Tankfahrzeuges neben einer Ermittlung des Füllstandes der Tankkammer eines Tankfahrzeuges gleichzeitig oder alternativ wenigstens eine weitere Größe bezüglich des Tankinhaltes, eines Abgabevorganges und/oder des Fahrzeuges ermittelt und mit dem ermittelten Füllstand der Tankkammer eines Tankfahrzeuges in Beziehung gebracht und ausgewertet wird.

Gemäß der vorliegenden Erfindung enthält ein System zur Ermittlung einer Füllstandsänderung in einer Tankkammer eines Tankfahrzeuges neben dem elektronischen Peilsystem oder allgemein Tankfahrzeug-Füllstandsmeßsystem eine Datenauswerteeinrichtung mit einem wahlweise, insbesondere in Abhängigkeit von einer geplanten Abgabemenge in eine Abgabeleitung aus der Tankkammer einschaltbaren Durchflußzähler.

Eine solche Kombination scheint auf den ersten Blick wenig Sinn zu machen - der Peilstab des Systems soll ja gerade den voluminösen, schweren und verschleißbehafteten Zähler ersetzen. Durchflußzähler und die zugehörigen Einrichtung zur Vermeidung der Messung von Gas sind aber nur dann schwer, wenn sie für große Durchflußraten geeignet sein sollen - typisch sind in der Branche Werte von 700 bis 1000 l/min. Bei einer solchen hohen Rate muß damit gerechnet werden, daß insbesondere gegen Ende einer Abgabe Gas- oder Luftanteile zusammen mit dem Produkt aus den Tankkammern abgesaugt und mit durch den Volumenzähler gepreßt werden, was zu groben Meßfehlern führen kann. Daher sind konstruktiv sehr aufwendige Einrichtungen zur Abscheidung von solchen Gasbeimengungen vorgeschrieben.

Wird aber ein solcher Zähler nur bei einer kleinen Abgabemenge von z.B. nur einen Bruchteil des üblichen Wertes eingesetzt, so kann ein kleiner Zähler eingesetzt werden, bei dem der Durchfluß selbst nur einen Bruchteil des üblichen Wertes betragen muß und der vorrichtungsmäßig sehr viel einfacher und kleiner ausgeführt werden kann. Über den Zähler brauchen nämlich nur diejenigen Abgaben gefahren zu werden oder erfolgen, bei denen die Menge zu klein ist, um sie mit dem elektronischen Peilsystem zuverlässig zu messen - also typischerweise Mengen unter 1000 l. Für solche kleinen Mengen ist ein Zähler mit einem Durchsatz von z.B. 100 l/min durchaus akzeptabel.

Die Mehrkosten, die mit dem zusätzlichen Zähler verbunden sind, können dadurch gering gehalten werden, daß die Weiterverarbeitung der Zählersignale (typisch werden hier z.B. elektrische Impulsgeber eingesetzt) in derselben elektronischen Vorrichtung erfolgt, wie die der Peilsignale des Tankfahrzeug-Füllstandsmeßsystems. Auch alle weiteren Anzeige-, Bedien-, Steuer- und Ausgabevorrichtungen (z.B. Drucker) brauchen selbstverständlich nur einmal vorhanden zu sein, weil sie gemeinsam genutzt werden.

Ein weiterer Vorteil ergibt sich durch die jederzeit mögliche gegenseitige Überprüfung der beiden Meßvorrichtungen, so daß z.B. Verschleißvorgänge im Zähler so frühzeitig erkannt werden können.

Die Kombination eines elektronischen Peilsystems mit einem Durchflußzähler bietet weitere wesentliche Vorteile, wenn man sich dabei auf einen Durchflußmesser kleiner Leistung beschränkt:
- Die Vorrichtungen zur Abscheidung von Gasen können wegen des geringen Durchflusses wesentlich weniger aufwendig gestaltet werden oder möglicherweise sogar ganz entfallen, wenn durch die Überwachung des kammerseitigen Füllstandes sichergestellt werden kann, daß bei dem geringen Volumenstrom keine Gase mitgerissen werden können.
- Über den Durchflußmesser oder -zähler werden selbstverständlich nur die in wenigen Fällen notwendigen Kleinmengenabgaben gefahren - für alle Abgaben mit Mengen größer als 1000 Liter wird der Zähler durch entsprechende Rohrleitungen und Steuerungsorgane umgangen, da hierbei ja der elektronische Peilstab bzw. das damit ausgestattete System zur Mengenmessung eingesetzt wird, und für dieses Meßverfahren Gasbeimengungen bei der Abgabe keinerlei negativen Einfluß haben.
- Das Restvolumen bei Durchflußzählern, das aus eichtechnischen Gründen im System verbleiben muß, beträgt bei den Meßanlagen der Leistungsklasse 700 - 1000 l üblicherweise 15 - 40 Liter. Wenn jetzt bei aufeinanderfolgenden Messungen verschiedene Produkte gemessen werden sollen (Beispiel: Heizöl, dann Dieselöl), muß bei der folgenden Abgabe mit Produktvermischungen in dieser Größenordnung gerechnet werden. Durch den kleineren Zähler und durch den weitgehenden Wegfall der Gasabscheidevorrichtungen kann diese Vermischungsmenge auf 1 - 3 Liter reduziert werden.
- Die für die Bedienung, Anzeige und Weiterverarbeitung der Meßdaten beider Systeme notwendige Vorrichtung kann gemeinsam genutzt werden. Dadurch können nicht nur Kosten gespart werden, sondern es wird auch die Bedienung stark vereinfacht, da das System z.B. automatisch aufgrund der eingegebenen Liefermenge entscheiden kann, welcher Abgabeweg zu wählen ist, und die notwendigen Steuervorgänge (wie Ventilumschaltung o.ä.) selbsttätig auslösen kann.
- Die gegenseitige Überprüfung der beiden Meßsysteme, was jederzeit und ohne besonderen Aufwand möglich ist, ermöglicht die frühzeitige Erkennung von Störungen.

Ohne Beschränkungen können zur Realisierung der vorliegenden Erfindung verschiedene Ausführungsvarianten eingesetzt werden. Insbesondere ist ein Weglassen von Einzelkomponenten oder Ersatz durch andere Komponenten mit ähnlicher Funktion denkbar. So können z.B. verschiedene Typen von Durchflußmessern (Treibschieber, Turbine, Kolben, usw.) eingesetzt werden. Die Gasabscheidevorrichtung kann mit mechanisch arbeitenden Sensoren (z.B. Schwimmer) oder mit elektronischen Niveaumeßvorrichtungen arbeiten. Es können, wenn es die Anwendung erfordert, auch mehrere Durchflußzähler eingesetzt werden.

Alle beschriebenen Kombinationen können vorteilhaft auch im stationären Bereich, also an Tanklagern eingesetzt werden.

Eine vorteilhafte Weiterbildung des erfindungsgemäßen Systems besteht darin, daß eine Eingabeeinrichtung für eine geplante Abgabemenge aus der Tankkammer und eine Steuerung vorgesehen sind, die die Abgabe automatisch so steuert, daß sie über den Durchflußzähler erfolgt, wenn die geplante Abgabemenge eine vorgebbare Abgabemengenuntergrenze ist oder unterschreitet, und/oder daß das elektronische Peilsystem und der Durchflußzähler zur Weiterverarbeitung und Anzeige von daraus gewonnenen Informationen mit gemeinsam genutzten Rechen-, Bedien- und Anzeigeeinrichtungen gekoppelt sind.

Bei weiteren mit Vorzug eingesetzte Ausgestaltungen der Erfindung kann vorgesehen sein, daß eine Steuerung dazu ausgelegt ist, aus Signalen des elektronischen Peilsystems einen Stillstand des Tankfahrzeuges zu erkennen und in einen solchen Fall eine Füllstandsermittlung und/oder -überwachung durchführt, und/oder daß eine Steuerung vorgesehen ist, mittels der Ventile an dem Tankfahrzeug und/oder in Abgabeleitungen steuerbar sind, und/oder daß ein GPS-Empfänger und eine damit gekoppelte Steuerung vorgesehen sind, mittels der eine Produktabgabe in Abhängigkeit vom Fahrzeugort steuerbar ist.

Bei dem erfindungsgemäßen Verfahren zur Ermittlung einer Füllstandsänderung in einer Tankkammer eines Tankfahrzeuges mittels eines elektronischen Peilsystems ist mit denselben Vorteilen, wie sie zu dem entsprechenden System gemäß der vorliegenden Erfindung genannt wurden, vorgesehen, daß gleichzeitig oder alternativ wenigstens eine weitere Größe bezüglich des Tankinhaltes, eines Abgabevorganges und/oder des Fahrzeuges ermittelt und mit dem ermittelten Füllstand der Tankkammer eines Tankfahrzeuges in Beziehung gebracht und ausgewertet wird.

Vorzugsweise erfolgt bei diesem Verfahren die Abgabe automatisch über den Durchflußzähler, wenn eine geplante Abgabemenge eine vorgebbare Abgabeuntergrenze ist oder unterschreitet. Eine bevorzugte Weiterbildung davon besteht darin, daß mit dem Füllstandsmeßsystem, insbesondere dem elektronischen Peilsystem, gewonnene Informationen über den Zufluß zu dem Durchflußzähler ausgenutzt werden, um die Gasfreiheit des flüssigen Abgabeproduktes zu überprüfen, und/oder daß Informationen aus dem Füllstandsmeßsystem, insbesondere dem elektronischen Peilsystem, und aus dem Durchflußzähler zur Weiterverarbeitung und Anzeige mit gemeinsam genutzten Rechen-, Bedien- und Anzeigeeinrichtungen gekoppelt sind.

Weitere vorzugsweise Ausgestaltungen des erfindungsgemäßen Verfahrens sehen vor,
daß mittels des elektronischen Peilsystems ein Stillstand des Fahrzeuges erkannt und in einem solchen Fall eine Füllstandsermittlung und/oder -überwachung durchgeführt wird, und/oder daß mittels des elektronischen Peilsystems steuernd in die Abläufe an Bord des Tankfahrzeuges eingegriffen wird, beispielsweise über elektropneumatische Ventile, und/oder
daß mittels drahtloser oder drahtgebundener Kommunikation Daten von ähnlichen, stationären Peilsystemen empfangen und diese mit den Meßergebnissen des elektronischen Peilsystems des Tankfahrzeuges korreliert und daraus sicherheitstechnische, qualitätssichernde und andere Maßnahmen abgeleitet werden, beispielsweise die Unterbrechung der Abgabe von Produkten, und/oder
daß mittels eines GPS-Empfängers zu jedem Zeitpunkt Information über den Standort des Tankfahrzeuges erhalten werden und mit Hilfe dieser Daten automatisch eine Auswahl aus der dem Fahrzeug in elektronisch lesbarer Form übergebenen Aufträge getroffen wird, wobei vorzugsweise die verfügbaren Daten genutzt werden, um zu entscheiden, ob ein Liefervorgang zulässig ist oder nicht, und entsprechende Steuerbefehle für eine Produktabgabe oder eine Produktabgabemenge freigibt oder verhindert, und/oder wobei ortsabhängig extrahierte Informationen dazu genutzt werden, um Abgabevorgänge zu modifizieren, beispielsweise die Abgabe nur mit kleinem Durchfluß, oder nur mit einem bestimmten Schlauchtyp zuzulassen.

Eine automatische Bestandsregistrierung und -kontrolle bei jedem Stopp des Tankfahrzeuges kann auf einfache Weise realisiert werden, wie nachfolgend beispielsweise dargestellt ist. Immer dann, wenn das Fahrzeug für längere Zeit stoppt, ist dies für ein mobiles Peilsystem, das ständig die Füllstände in den Tanks erfaßt, dadurch erkennbar, daß die Wellenhöhe in den Tanks abnimmt. Wenn diese - typisch innerhalb von einigen Minuten - auf eine Höhe von unter einen vorgebbaren Schwellenwert von z.B. 10 mm gefallen sind, registriert die Steuerung den mittleren Füllstand und speichert ihn, insbesondere dann, wenn sich gegenüber der letzten solchen Peilung deutliche Änderungen ergeben haben, mit Uhrzeit und Datum auf einem Speichermedium ab. Damit können Liefertouren von Tankfahrzeugen automatisch protokolliert werden, indem zeitliche Änderungen des Füllstandes automatisch ausgewertet und ereignisabhängig gespeichert werden.

Die vorliegende Erfindung ermöglicht vorrichtungs- und verfahrensmäßig auch eine einfache und damit vorteilhafte Produkterkennung anhand Dichte bzw. Schallgeschwindigkeit. Aufgrund der insbesondere bei Ultraschallpeilverfahren zur Verfügung stehenden Informationen über die Dichte der Produkte in den Kammern können zumindest durch einen groben Vergleich die manuellen Produkteingaben des Fahrers überprüft werden. Es wird also z.B. nicht möglich sein, für eine mit Benzin beladene Kammer Diesel einzugeben und umgekehrt.

Das System und Verfahren gemäß der vorliegenden Erfindung ermöglicht auch auf einfache Weise eine Meldung, wenn eine Tankkammer und/oder das Abgabeleitungssystem leer sind/ist. Das Peilsystem kann nicht nur Flüssigkeitspegel im Bereich zwischen 100 und 2500 mm ermitteln, sondern erhält bei niedrigeren Füllständen durch Sensoren in der Kammer eine echte Leer-Meldung (Pegel < 10 mm). Gleiches gilt für die in der Befüllleitung angebrachten Produktdetektoren. Den Zeitpunkt jeder Zustandsänderung kann das System automatisch speichern. Unplausible Zustandsänderungen können außerdem automatisch erkannt und z.B. in einem "Ausnahmen-Journal" zusammengestellt werden.

Die Erfindung ermöglicht ferner eine neigungskorrigierte Kammer-Leer-Überwachung. Ein recht häufig auftretendes, meist aber nicht erkanntes Problem bei Abgaben unter starkem Gefälle (Längs- oder Querneigung des Tankfahrzeuges) kann mittels eines im mobilen Peilsystem integrierten Neigungssensors auf trigonometrischem Weg detektiert und erfaßt werden. Wenn es ab einem bestimmten Neigungswinkel nicht mehr möglich ist, die Tankkammer vollständig zu leeren, trotz z.B. einer Restmenge > 5 l, dann kann ein entsprechendes Warnsignal erzeugt werden. Obwohl alle Produktdetektoren und Leer-Sensoren kein Produkt mehr nachweisen können (das Produkt steht z.B. bei starker Schräglage des Fahrzeugs seitlich in der Kammer und kann dort weder auslaufen noch nachgewiesen werden), wäre eine weitere Abgabe von oder Belieferung des Kunden mit Produkt möglich, wenn die Schräglage des Tankfahrzeuges behoben wird.

Eine Registrierung des Beginns und des Endes von Beladungen sowie von Abladungen ist eine weitere vorteilhafte Ausgestaltung und Anwendung der vorliegenden Erfindung. Durch ständige Überwachung der Pegelsignale wie der Signale der Produktdetektoren kann präzise der Beginn und das Ende der Beladung / Abladung jeder Tankkammer registriert werden.

Eine elektronische Kontrolle der BV und anderer Ventile führt zu einer erhöhten Sicherheit und einer Vereinfachung von Umfüllvorgängen. Peilsysteme bieten die Möglichkeit, die im Rohrsystem angebrachten Ventile z.B. mittels elektropneumatischer oder Magnetaktuatoren zu steuern. Damit können zum einen komplexe pneumatische Verriegelungen ersetzt werden, und zum anderen auch automatisch Prüfungen durchgeführt werden. Ein Beispiel: Vor jeder Abgabe wird zunächst eine Peilung vorgenommen, und werden danach die Bodenventile geöffnet - die Durchgangsventile zur Abgabe werden jedoch noch geschlossen gehalten. Dann wird eine zweite Peilung durchgeführt. Falls hier Differenzen auftreten sollten, würde das bedeuten, daß aus den Befüllleitungen Produkt entwendet wurde. Die Fehlmenge wird dabei quantitativ erfaßt.

Erweiterte Möglichkeiten ergeben sich ferner durch eine LPR-Verbindung. Mittels einer Low Power Radio (LPR) Datenverbindung wie z.B. einer DECT-Funkstrecke zwischen dem Peilsystem an Bord des Tankfahrzeuges und einem Peilsystem auf den belieferten Tankstellen bzw. während des Beladevorgangs mit den Zählern der Füllstelle lassen sich die Möglichkeiten nochmals erheblich erweitern, wie nachfolgend für einige Anwendungen dargestellt ist.

Zur Abfüllsicherung können beispielsweise vor und auch während der gesamten Abgabe können die Pegel von Bodentanks abgefragt werden. Damit kann präventiv gegen Überfüllungen vorgebeugt werden, die auftreten könnte, wenn z.B. eine entsprechende Mengenvorwahl erzwungen würde. Diese Möglichkeit dürfte vor allem dann interessant sein, wenn tankstellenseitig keine separate Abfüllsicherung vorhanden ist (weil z.B. nationale Vorschriften dies nicht vorschreiben).

Durch ständigen Vergleich zwischen der aus den fahrzeugeigenen Tanks abgegebenen Menge mit der in den Bodentanks ankommenden Menge lassen sich zumindest größere Lecks erkennen und der Schaden durch.auslaufendes Produkt durch automatisches Schließen der Bodenventile (BV) begrenzen, sobald signifikant weniger im Bodentank ankommt als aus den Tankkammern des Fahrzeugs abfließt. damit wird auf einfache und wirksame Weise eine "Abfüllschlauchsicherung" insbesondere beim Abladen erreicht.

Eine Qualitätssicherung beim Abladen kann ebenso einfach realisiert werden. In der Regel "kennt" das tankstellenseitige Peilsystem die Produktzuordnung zu den Bodentanks. In Verbindung mit der automatischen Steuerung der Abgabe an Bord des Fahrzeugs lassen sich so durch Korrelation der Füllstandsmeßdaten Vermischungen erkennen und vom Umfang und damit vom Schaden her begrenzen. Dies kann beispielsweise so gestaltet sein/werden: Mittels einer vollelektronischen Steuerung der Bodenventile wird die Abgabe an der Steuerung des mobilen Peilsystems gestartet. Die BV's öffnen nach der Anfangspeilung, allerdings bewußt gesteuert nicht gleichzeitig. Zunächst wird nur ein Produkt freigegeben, und zwar in einer begrenzten Menge von z.B. 100 1. Danach schließt das BV wieder vorzugsweise automatisch und es wird auf das nächste Peilergebnis aus den Bodentanks gewartet. Erst wenn hier eine entsprechende Füllstandszunahme in einem der Tanks detektiert wird, und wenn diese im richtigen Tank erfolgte, d.h. keine Vermischung auftrat, öffnet das BV wieder und der Rest des Produktes wird abgegeben. Z.B. gleichzeitig oder nacheinander findet derselbe "Testprozeß" mit der nächsten Kammer des Fahrzeugs statt. Die Verzögerung durch diese sequentielle Steuerung hängt stark von der Geschwindigkeit ab, mit der das tankstellenseitige System auf die Peilhöhenänderungen reagiert. Es gibt besonders schnell reagierende Systeme, die innerhalb von max. 5 - 10 Sekunden reagieren. Ggf. könnte die "Testmenge" von 100 1 auch noch reduziert werden, wenn das Peilsystem der Bodentanks ausreichend empfindlich gestaltet ist, z.B. die durch den Flüssigkeitsschwall ausgelösten Oberflächenwellen "wahrzunehmen".

Auch eine Qualitätssicherung beim Beladen kann auf einfache Weise erhalten werden. In prinzipiell ähnlicher weise kann die Produkterkennung bei der Beladung aufgrund der Korrelation zwischen dem Zeitpunkt des Anlaufens des Füllstellenzählers und z.B. des Zeitpunktes der Benetzung des Produktdetektors in der Befüllleitung ohne irgendwelche TAGs oder sonstige Sensoren durchgeführt werden. Dies erfordert, wenn die notwendigen Kommunikationsschnittstellen nicht vorhanden sind, einen Eingriff in die füllstellenseitigen Zähler. Dazu könnte es z.B. ausreichen, das Signal des für jeden Zähler verfügbaren Impulsgebers parallel abzuzweigen, d.h. außer diesem im Prinzip rückwirkungsfrei möglichen Anschluß sind keine weiteren Änderungen an der Füllstelle notwendig.

Eine Erkennung von u.U. unberechtigten Fremdbelieferungen an einer Tankstelle ist ein weiterer Anwendungsfall der vorliegenden Erfindung. Häufig besteht zwischen einem Anlieferer und einem Tankstellenbetreiber ein Vertrag, der letzteren zum exklusiven Bezug von Produkten verpflichtet. Umgehungen dieses Vertrages lassen sich dadurch erkennen, daß die tankstellenseitige Füllstandsmeßvorrichtung jede Belieferung automatisch erkennt und mit Uhrzeit und Datum abspeichert. Mit einer LPR-Datenverbindung wird diesen Belieferungsaufzeichnungen die Kennung des anliefernden Fahrzeuges hinzugefügt - solche Belieferungen sind also als vertragsgemäß markiert. Liefert dagegen ein anderes, nicht mit LPR und/oder den notwendigen Zugangsberechtigungen ausgestattetes Fahrzeug an, so wird die Belieferung als "unberechtigt" abgespeichert. Der Abruf der gespeicherten Daten kann sowohl über das Fahrzeug erfolgen (wenn dieses über einen ausreichenden Speicher verfügt), als auch z.B. über das öffentliche Telefonnetz. In ähnlicher Weise lassen sich auch unberechtigte Entnahmen registrieren, wenn diese z.B. außerhalb der Öffnungszeiten der Tankstelle erfolgen, da sie von der Füllstandsmeßvorrichtung ebenfalls aufgezeichnet werden können.

Erweiterte Möglichkeiten der vorliegenden Erfindung ergeben sich ferner in Kombination mit GPS. In Kombination mit einem GPS-Empfänger, der einem modular konzipierten elektronischen Peilsystem hinzugefügt werden kann, gibt es weitere Möglichkeiten zur Steigerung des Nutzens eines elektronischen Systems, wie nachfolgend anhand einiger Beispiele erläutert wird.

Beispielsweise ist eine Registrierung des Ortes von regulären und irregulären Vorgängen möglich. Durch die permanent verfügbare Positionsinformation kann bei jedem Vorgang die aktuelle geografische Länge und Breite zusammen mit den Ereignisdaten festgehalten werden. Dies ermöglicht insbesondere im Fall von zweifelhaften Aktivitäten ganz neue Möglichkeiten der Überwachung.

Als weitere Einsatzmöglichkeit besteht eine automatische Erkennung und/oder Auswahl von Aufträgen über den Ort. Wird dem System eine Auftragsliste mitgegeben, so kann anhand der geografischen Information automatisch erkannt werden, an welchem Lieferort sich das Fahrzeug befindet. Damit zusammenhängende Vorgaben (z.B. Liefermengen) können somit automatisch und ohne Zutun des Fahrers aktiviert werden.

Ferner ist eine automatische Anpassung an örtliche Gegebenheiten möglich. Wenn bei einer bestimmten Tankstelle bestimmte Beschränkungen einzuhalten sind, wie z.B. nur Abgabe über einen Schlauch, oder Umgehung einer an dieser Tankstelle nicht vorhandenen Sicherheitsvorrichtung, so können die Ortsinformationen dazu benutzt werden, auf diese Einschränkungen automatisch zu reagieren und z.B. den Fahrer vor der Abgabe darüber zu informieren.

Weiterhin ist beispielsweise ein Blockieren von Lieferungen an unzulässigen Orten eine sehr vorteilhafte Anwendung der vorliegenden Erfindung. Wenn ein Fahrer versuchen sollte, Lieferungen an einem Ort vorzunehmen, der dem GPS-System nicht bekannt ist, kann das mobile Peilsystem die Entnahme von Produkten vollständig blockieren.

Die kontinuierliche Bestandsüberwachung, die seit dem Aufkommen von elektronischen Peilsystemen speziell für Mineralöltankfahrzeuge möglich ist, eröffnet den Betreibern gegenüber den konventionellen Meßanlagen neue Möglichkeiten hinsichtlich insbesondere
- der lückenlosen Bestandsüberwachung bei allen Vorgängen in Kombination mit dem jeweils registrierten Anfangs- und Endbestand, und
- dem Nutzung dieser Informationen für Qualitätssicherung und für sicherheitstechnische Belange, insbesondere, wenn mittels drahtloser Datenübertragung die Informationen mit denen landseitiger Systeme korreliert werden können.

Verschiedenste Varianten der Erfindung durch Weglassen von Einzelkomponenten oder Ersatz durch andere Komponenten mit ähnlicher Funktion sind denkbar, wie z.B.
- verschiedene Typen von Peilsystemen (Meßverfahren, Auswertealgorithmen usw.),
- verschiedene Typen von Kommunikationsverbindungen (drahtgebunden, unter Nutzung vorhandener Leitungen, verschiedene Funkbänder und -kommunikationsverfahren), und/oder
- verschiedene Methoden zur Ortsbestimmung, z.B. statt mit GPS-Empfänger durch Nutzung des vorhandenen Tachografen (Auswertung von Wegimpulsen), oder durch Nutzung anderer Systeme an Bord des Fahrzeugs, wie Navigationssysteme.

Die grundsätzlich andere Arbeitsweise dieser von elektronischen Peilsystemen zur Füllstandserfassung und Füllstandsänderungsbestimmung gegenüber Durchflußmessern eröffnet in geschickter Weise neuartige Anwendungsmöglichkeiten, die für den Anwender meßbaren Nutzen bringen, dabei aber ohne den bei konventionellen Lösungen notwendigen Sonderaufwand realisierbar sind.

In den Figuren der Zeichnung wird die Erfindung lediglich exemplarisch, d.h. insbesondere nicht beschränkend, anhand von Ausführungsbeispielen näher erläutert.

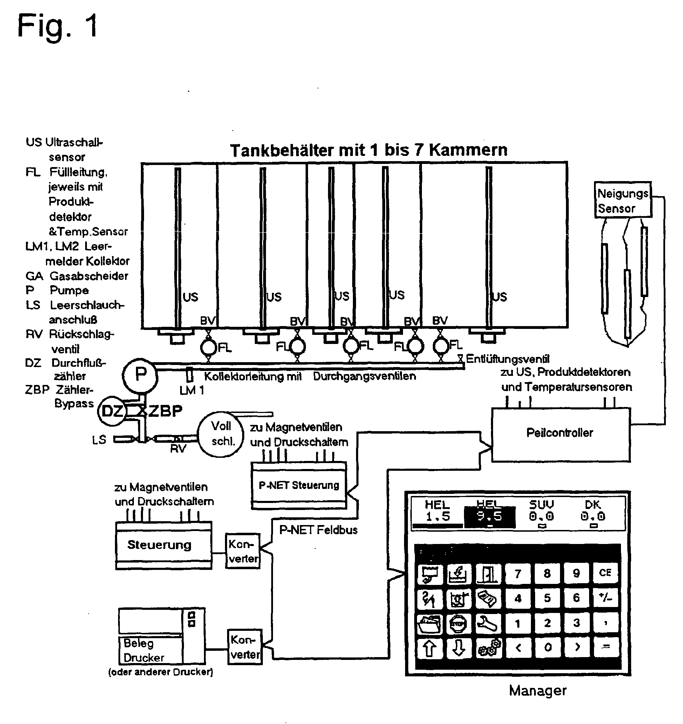

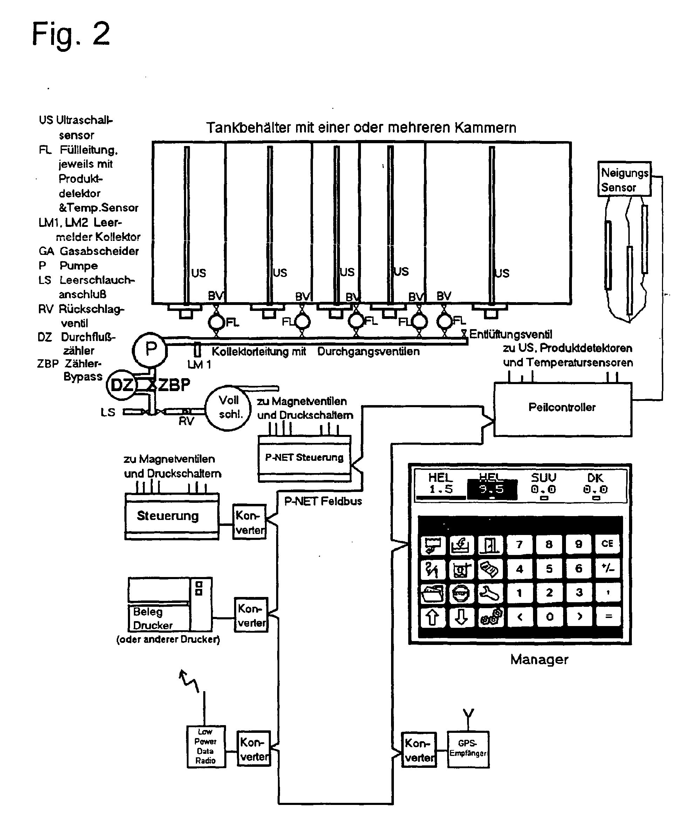

In der Fig. 1 ist schematisch ein erstes Ausführungsbeispiel eines Systems zur Ermittlung einer Füllstandsänderung in einer Tankkammer eines Tankfahrzeuges gezeigt. Eine zum System gehörende Datenauswerteeinrichtung enthält einen wahlweise, insbesondere in Abhängigkeit von einer geplanten Abgabemenge in eine Abgabeleitung aus der Tankkammer einschaltbaren Durchflußzähler. Ferner sind Ventile in Abhängigkeit von Signalen steuerbar, die von Ultraschallsensoren eines elektronischen Peilsystems zur Ermittlung der Füllstände der Tankkammern erhalten werden. Ein zweites Ausführungsbeispiel der Erfindung ist in der Fig. 2 schematisch gezeigt.

Gleiche Bezeichnungen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezeichnungen versehen sind, unabhängig davon, ob solche Merkmale gesondert beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Die Erfindung ist nicht auf die Merkmale und Merkmalskombinationen des vorbeschriebenen und in der Zeichnung gezeigten Ausführungsbeispiels beschränkt. Die einzelnen Aspekte, Merkmale und Merkmalskombinationen der in den vorliegenden Unterlagen offenbarten Ausgestaltungen, Merkmale und Funktionen sind sowohl jeweils einzeln, als auch in ihrer Kombination umsetzbar und schutzwürdig, auch wenn sie nicht explizit als Erfindung bezeichnet sind. Neben den in den vorliegenden Unterlagen enthaltenen allgemeinen und konkreten Angaben zur Realisierung eines Systems und Verfahrens zur Ermittlung einer Füllstandsänderung in einer Tankkammer eines Tankfahrzeuges nach der Erfindung gehören zum Umfang der Erfindung auch alle Variationen, Modifikationen, Substitutionen und Kombinationen, die der Fachmann ohne weiteres aus den Unterlagen selbst und/oder unter Hinzuziehung seines Fachwissens erkennen kann. Insbesondere ist die vorliegende Erfindung nicht auf Anwendungen auf dem Gebiet von Tankfahrzeugen für Mineralölprodukten beschränkt, auch wenn hierauf vorstehend überwiegend Bezug genommen wurde, was lediglich als beispielhaft zu verstehen ist, sondern kann in ihren einzelnen Ausgestaltungen mit Vorteil bei Tankfahrzeugen für fluide Produkte aller Art eingesetzt werden.

## Patentansprüche

1. System zur Ermittlung einer Füllstandsänderung in einer Tankkammer eines Tankfahrzeuges, mit einem elektronischen Peilsystem (US) zur Füllstandserfassung der Tankkammer des Tankfahrzeuges, wobei wenigstens eine weitere Datenerfassungs- oder -auswerteeinrichtüng (DZ, LM1) für wenigstens eine weitere Größe vorgesehen ist,
**dadurch gekennzeichnet,**
**dass** die weitere Datenerfassungs- oder -auswerteeinrichtung einen wahlweise in eine Abgabeleitung aus der Tankkammer einschaltbaren Durchflusszähler (DZ) enthält, und dass noch eine weitere Datenerfassungs- oder -auswerteeinrichtung für wenigstens eine weitere Größe bezüglich des Tankinhaltes, eines Abgabevorganges und/oder des Fahrzeuges vorgesehen ist.

2. System nach Anspruch 1,
**dadurch gekennzeichnet,**
**dass** eine Eingabeeinrichtung für eine geplante Abgabemenge aus der Tankkammer und eine Steuerung vorgesehen sind, die die Abgabe automatisch so steuert, dass sie über den Durchflusszähler (DZ) erfolgt, wenn die geplante Abgabemenge eine vorgebbare Abgabemengenuntergrenze ist oder unterschreitet.

3. System nach Anspruch 1 oder 2,
**dadurch gekennzeichnet,**
**dass** das elektronische Peilsystem (US) und der Durchflusszähler (DZ) zur Weiterverarbeitung und Anzeige von daraus gewonnenen Informationen mit gemeinsam genutzten Rechen-, Bedien- und Anzeigeeinrichtungen gekoppelt sind.

4. System nach einem der vorhergehenden Ansprüche,
**dadurch gekennzeichnet,**
**dass** eine Steuerung dazu ausgelegt ist, aus Signalen des elektronischen Peilsystems (US) einen Stillstand des Tankfahrzeuges zu erkennen und in einen solchen Fall eine Füllstandsermittlung und/oder -überwachung durchzuführen.

5. System nach einem der vorhergehenden Ansprüche,
**dadurch gekennzeichnet,**
**dass** eine Steuerung vorgesehen ist, mittels der Ventile (ZBP, RV, BV) an dem Tankfahrzeug und/oder in Abgabeleitungen steuerbar sind.

6. System nach einem der vorhergehenden Ansprüche,
**dadurch gekennzeichnet,**
**dass** ein GPS-Empfänger und eine damit gekoppelte Steuerung vorgesehen sind, mittels der eine Produktabgabe in Abhängigkeit vom Fahrzeugort steuerbar ist.

7. Verfahren zur Ermittlung einer Füllstandsänderung in einer Tankkammer eines Tankfahrzeuges mittels eines elektronischen Peilsystems (US), wobei gleichzeitig oder alternativ wenigstens eine weitere Größe ermittelt und mit dem ermittelten Füllstand der Tankkammer eines Tankfahrzeuges in Beziehung gebracht und ausgewertet wird,
wobei die Abgabe automatisch über einen Durchflusszähler (DZ) erfolgt, wenn eine geplante Abgabemenge eine vorgebbare Abgabeuntergrenze ist oder unterschreitet, und
dass gleichzeitig oder alternativ wenigstens eine weitere Größe bezüglich des Tankinhaltes, eines Abgabevorganges und/oder des Fahrzeuges ermittelt und mit dem ermittelten Füllstand der Tankkammer eines Tankfahrzeuges in Beziehung gebracht und ausgewertet wird.

8. Verfahren nach Anspruch 7,
**dadurch gekennzeichnet,**
**dass** mit dem Füllstandsmesssystem, insbesondere dem elektronischen Peilsystem (US), gewonnene Informationen über den Zufluss zu dem Durchflusszähler ausgenutzt werden, um die Gasfreiheit des flüssigen Abgabeproduktes zu überprüfen

9. Verfahren nach Anspruch 7 oder 8,
**dadurch gekennzeichnet,**
**dass** Informationen aus dem Füllstandsmesssystem, insbesondere dem elektronischen Peilsystem (US), und aus dem Durchflusszähler (DZ) zur weiterverarbeitung und Anzeige mit gemeinsam genutzten Rechen-, Bedien- und Anzeigeeinrichtungen gekoppelt sind.

10. Verfahren nach einem der Ansprüche 7 bis 9,
**dadurch gekennzeichnet,**
**dass** mittels des elektronischen Peilsystems (US) ein Stillstand des Fahrzeuges erkannt und in einem solchen Fall eine Füllstandsermittlung und/oder -überwachung durchgeführt wird.

11. Verfahren nach einem der Ansprüche 7 bis 10,
**dadurch gekennzeichnet,**
**dass** mittels des elektronischen Peilsystems (US) steuernd in die Abläufe an Bord des Tankfahrzeuges eingegriffen wird, beispielsweise über elektropneumatische Ventile.

12. Verfahren nach einem der Ansprüche 7 bis 11,
**dadurch gekennzeichnet,**
**dass** mittels drahtloser oder drahtgebundener Kommunikation Daten von ähnlichen, stationären Peilsystemen empfangen und diese mit den Messergebnissen des elektronischen Peilsystems des Tankfahrzeuges korreliert und daraus sicherheitstechnische, qualitätssichernde und andere Maßnahmen abgeleitet werden, beispielsweise die Unterbrechung der Abgabe von Produkten.

13. Verfahren nach einem der Ansprüche 7 bis 12,
**dadurch gekennzeichnet,**
**dass** mittels eines GPS-Empfängers zu jedem Zeitpunkt Information über den Standort des Tankfahrzeuges erhalten werden und mit Hilfe dieser Daten automatisch eine Auswahl aus der dem Fahrzeug in elektronisch lesbarer Form übergebenen Aufträge getroffen wird.

14. Verfahren nach Anspruch 13,
**dadurch gekennzeichnet,**
**dass** die verfügbaren Daten genutzt werden, um zu entscheiden, ob ein Liefervorgang zulässig ist oder nicht, und entsprechende Steuerbefehle für eine Produktabgabe oder eine Produktabgabemenge freizugeben oder zu verhindern.

15. Verfahren nach Anspruch 13 oder 14,
**dadurch gekennzeichnet,**
**dass** ortsabhängig extrahierte Informationen dazu genutzt werden, um Abgabevorgänge zu modifizieren, beispielsweise die Abgabe nur mit kleinem Durchfluss, oder nur mit einem bestimmten Schlauchtyp zuzulassen.

## Claims

1. System for determining a level change in a tank chamber of a tanker, having an electronic sounding system (US) for detecting the level in the tank chamber of the tanker, wherein at least one further data detection or evaluation unit (DZ, LM1) for at least one further variable is provided, **characterised in that** the further data detection or evaluation unit contains a flow meter (DZ) which can be optionally switched on in an output line from the tank chamber, and **in that** a yet further data detection or evaluation unit for at least one further variable relating to the tank contents, an output process and/or the vehicle is provided.

2. System as claimed in Claim 1, **characterised in that** an input unit for a predetermined output amount from the tank chamber and a controller are provided, which controller automatically controls the output such that it is effected via the flow meter (DZ) when the predetermined output amount is at or is lower than a predeterminable output amount lower limit.

3. System as claimed in Claim 1 or 2, **characterised in that** the electronic sounding system (US) and the flow meter (DZ) are coupled with commonly used computational, operational and display units for the further processing and displaying of information obtained therefrom.

4. System as claimed in any one of the preceding Claims, **characterised in that** a controller is designed so as to recognise from signals from the electronic sounding system (US) that the tanker is at a standstill and in such a case to effect level determining and/or monitoring.

5. System as claimed in any one of the preceding Claims, **characterised in that** a controller is provided, by means of which valves (ZBP, RV, BV) on the tanker and/or in the output lines can be controlled.

6. System as claimed in any one of the preceding Claims, **characterised in that** a GPS receiver and a controller coupled thereto are provided, by means of which product output can be controlled in dependence upon the vehicle location.

7. Method for determining a level change in a tank chamber of a tanker by means of an electronic sounding system (US), wherein simultaneously or alternatively at least one further variable is determined and evaluated and related to the determined level of the tank chamber of a tanker, wherein the output is automatically effected via a flow meter (DZ) when a predetermined output amount is at or is lower than a predeterminable output lower limit, and in that simultaneously or alternatively at least one further variable relating to the tank contents, an output process and/or the vehicle is determined and evaluated and related to the determined level of the tank chamber of a tanker.

8. Method as claimed in Claim 7, **characterised in that** information regarding the flow to the flow meter obtained by the level measuring system, in particular the electronic sounding system (US), is used to check the gas-free status of the liquid output product.

9. Method as claimed in Claim 7 or 8, **characterised in that** information from the level measuring system, in particular the electronic sounding system (US), and from the flow meter (DZ) is coupled with commonly used computational, operational and display units for further processing and display.

10. Method as claimed in any one of Claims 7 to 9, **characterised in that** the electronic sounding system (US) is used to recognise that the vehicle is at a standstill and in such a case level determining and/or monitoring is effected.

11. Method as claimed in any one of Claims 7 to 10, **characterised in that** by means of the electronic sounding system (US) the operations on board the tanker are controlled, for example via electro-pneumatic valves.

12. Method as claimed in any one of Claims 7 to 11, **characterised in that** by means of wireless or wired communication, data are received from similar, stationary sounding systems and are correlated with the measuring results from the electronic sounding system of the tanker, from which data safety-related, quality-assurance and other features are derived, for example the interruption of product output.

13. Method as claimed in any one of Claims 7 to 12, **characterised in that** by means of a GPS receiver, information regarding the location of the tanker is received at all times and using this data a selection is automatically made from the orders assigned to the vehicle in electronically readable form.

14. Method as claimed in Claim 13, **characterised in that** the available data are used in order to decide whether or not a supply process is admissible and to release or prevent corresponding control commands for a product output or product output amount.

15. Method as claimed in Claim 13 or 14, **characterised in that** information extracted in a location-dependent manner is used to modify output processes, for example to allow the output only with a low discharge or only with a particular type of hose.

## Revendications

1. Système pour déterminer une modification du niveau de remplissage dans une chambre réservoir d'un camion-citerne, comportant un système de repérage goniométrique électronique (US) pour détecter le niveau de remplissage de la chambre réservoir du camion-citerne, au moins un autre dispositif d'acquisition ou d'évaluation de données (DZ, LM 1) étant prévu pour au moins une autre grandeur,
**caractérisé en ce que**
l'autre dispositif d'acquisition ou d'évaluation de données comprend un débitmètre (DZ) susceptible d'être mis en marche sélectivement dans une conduite de distribution hors de la chambre réservoir, et **en ce qu'**il est prévu encore un autre dispositif d'acquisition ou d'évaluation de données pour au moins une autre grandeur relative au contenu du réservoir, à une opération de distribution et/ou au véhicule.

2. Système selon la revendication 1,
**caractérisé en ce que**
il est prévu un dispositif de saisie de données pour une quantité prévue à distribuer hors de la chambre réservoir, et une commande qui commande automatiquement la distribution de manière à passer par le débitmètre (DZ) lorsque la quantité prévue à distribuer est égale ou inférieure à une limite inférieure prédéterminée de la quantité de distribution.

3. Système selon la revendication 1 ou 2,
**caractérisé en ce que**
le système de repérage électronique (US) et le débitmètre (DZ) sont couplés à des dispositifs de calcul, de manipulation et d'affichage utilisés communément pour le traitement et l'affichage d'informations obtenues.

4. Système selon l'une des revendications précédentes,
**caractérisé en ce que**
une commande est conçue pour reconnaître à partir des signaux du système de repérage électronique (US) un arrêt du camion-citerne et pour exécuter dans un tel cas une détection et/ou une surveillance du niveau de remplissage.

5. Système selon l'une des revendications précédentes,
**caractérisé en ce que**
il est prévu une commande qui permet de commander des valves (ZBP, RV, BV) sur le camion-citerne et/ou dans des conduites de distribution.

6. Système selon l'une des revendications précédentes,
**caractérisé en ce que**
il est prévu un récepteur GPS et une commande couplée à celui-ci et permettant de commander une distribution de produit en fonction du lieu du véhicule.

7. Procédé pour déterminer une modification du niveau de remplissage dans une chambre réservoir d'un camion-citerne au moyen d'un système de repérage électronique (US), en déterminant simultanément ou en variante au moins une autre grandeur qui est mise en relation avec le niveau de remplissage détecté de la chambre réservoir d'un camion-citerne et qui est évaluée,
dans lequel la distribution s'effectue automatiquement via un débitmètre (DZ) lorsqu'une quantité prévue à distribuer est égale ou inférieure à une limite de distribution inférieure prédéterminée, et on détecte simultanément ou en variante au moins une autre grandeur relative au contenu du réservoir, à une opération de distribution et/ou au véhicule, et on la met en relation avec le niveau de remplissage détecté de la chambre réservoir d'un camion-citerne et on l'évalue.

8. Procédé selon la revendication 7,
**caractérisé en ce que**
des informations obtenues avec le système de mesure du niveau de remplissage, en particulier avec le système de repérage électronique (US), et relatives au débit vers le débitmètre sont exploitées pour vérifier l'absence de gaz dans le produit liquide à distribuer.

9. Procédé selon la revendication 7 ou 8,
**caractérisé en ce que**
des informations provenant du système de mesure du niveau de remplissage, en particulier du système de repérage électronique (US), et du débitmètre (DZ) sont couplées avec des dispositifs de calcul, de manipulation et d'affichage utilisés communément pour le traitement et l'affichage.

10. Procédé selon l'une des revendications 7 à 9,
**caractérisé en ce que**
au moyen du système de repérage électronique (US), on reconnaît un arrêt du véhicule et dans un tel cas on procède à une détection et/ou à une surveillance du niveau de remplissage.

11. Procédé selon l'une des revendications 7 à 10,
**caractérisé en ce que**
au moyen du système de repérage électronique (US), on intervient par commande dans les opérations à bord du camion-citerne, par exemple via des valves électropneumatiques.

12. Procédé selon l'une des revendications 7 à 11,
**caractérisé en ce que**
par communication sans fil ou avec fil, on reçoit des données de systèmes de repérage stationnaires similaires, et on les met en corrélation avec les résultats de mesure du système de repérage électronique du camion-citerne et on en déduit des mesures en termes de sécurité, d'assurance de qualité et d'autres mesures, par exemple l'interruption de la distribution de produits.

13. Procédé selon l'une des revendications 7 à 12,
**caractérisé en ce que**
au moyen d'un récepteur GPS, on obtient à tout moment des informations sur le lieu du camion-citerne, et à l'aide de ces données, on procède automatiquement à un choix parmi les commandes transmises au véhicule sous forme lisible par voie électronique.

14. Procédé selon la revendication 13,
**caractérisé en ce que**
les données disponibles sont utilisées pour décider si une opération de livraison est admissible ou non, et pour libérer ou empêcher des ordres de commande correspondants en vue d'une distribution de produits ou d'une quantité de distribution de produit.

15. Procédé selon la revendication 13 ou 14,
**caractérisé en ce que**
des informations extraites en fonction du lieu sont utilisées pour modifier des opérations de distribution, par exemple pour admettre la distribution à un débit seulement faible, ou uniquement avec un tuyau flexible d'un type déterminé.
